# EUROPEAN PATENT APPLICATION

(11) **EP 4 566 825 A1**
(43) Date of publication of application: **11.06.2025**
(21) Application number: 24216746.8
(22) Date of filing: 02.12.2024
(51) Int. Cl.: B41J 2/21

(54) **INKJET IMAGE FORMING APPARATUS**

(30) Priority: 05.12.2023 JP 2023205304
(71) Applicant: KYOCERA Document Solutions Inc., Osaka-shi, Osaka, 540-8585 (JP)
(72) Inventor: MAEZAWA, Nobuhiro, Osaka-shi, Osaka, 540-8585 (JP)
(74) Representative: Kurig, Thomas

(57) **Abstract**

An inkjet image forming apparatus (1) includes a plurality of head unit (41), a corona treatment unit (5), and a control part (31). The head units (41) are provided for inks of a plurality of colors including white, and eject the ink to a printing base material which is conveyed along a predetermined conveyance direction. The corona treatment unit (5) is arranged on an upstream side of the head units (41) in the conveyance direction and applies corona discharge to the printing base material. The control part (31) controls a discharge amount of the corona discharge applied by the corona treatment unit (5). The control part (31) controls the discharge amount so that W1≧W2 when the discharge amount in a case of a print job for ejecting the white ink is set to W1 (W·min/m²) and the discharge amount in a case of a print job for not ejecting the white ink is set to W2 (W·min/m²).

## Description

### BACKGROUND

The present disclosure relates to an inkjet image forming apparatus which forms an image on a printing base material by an inkjet method.

In the inkjet type image forming apparatus, as described in WO2017/187905 and JP2022-191181, in order to enhance an adhesion of ink to a printing base material, a corona treatment in which the printing base material is corona-discharged may be performed.

In the printing apparatus described in WO2017/18790, the corona treatment is performed in order to improve a pinning property of the ink after the ink is landing. In the inkjet recording apparatus described in JP2022-1911, the corona treatment is performed to suppress a lowering of a color developing property caused by the ink that is later landed being buried in the image formed by the ink that is previously landed.

In general, it is known that the white ink is easily peeled off from the printing base material. This is because it is necessary to increase a particle size of a pigment in order to increase a contrast ratio of the white color, and but in this case, the pigment cannot be completely coated with a binder resin, resulting in poor adhesion to the printing base material. This tendency is particularly strong in the case of a printing base material having a smooth surface such as a plastic film.

### SUMMARY

An inkjet image forming apparatus according to the present disclosure includes a plurality of head units, a corona treatment unit, and a control part. The head units are provided for inks of a plurality of colors including white, and ejects the ink to a printing base material which is conveyed along a predetermined conveyance direction. The corona treatment unit is arranged on an upstream side of the head units in the conveyance direction and applies corona discharge to the printing base material. The control part controls a discharge amount of the corona discharge applied by the corona treatment unit. The control part controls the discharge amount so that W1≧W2 when the discharge amount in a case of a print job for ejecting the white ink is set to W1 (W·min/m²) and the discharge amount in a case of a print job for not ejecting the white ink is set to W2 (W·min/m²).

### BRIEF DESCRIPTION OF THE DRAWINGS

FIG. 1 is a front view schematically showing one inkjet image forming apparatus according to one embodiment of the present disclosure.
FIG. 2 is a view schematically showing a corona treatment unit, in the inkjet image forming apparatus according to one embodiment of the present disclosure.
FIG. 3 is a plan view showing a head unit, in the inkjet image forming apparatus according to the embodiment of the present disclosure.
FIG. 4A is a photograph showing a result (magenta image) of a peeling test, in the inkjet image forming apparatus according to the embodiment of the present disclosure.
FIG. 4B is a photograph showing a result (white image, the corona-treatment is performed) of the peeling test, in the inkjet image forming apparatus according to the embodiment of the present disclosure.
FIG. 4C is a photograph showing a result (white image, the corona-treatment is not performed) of the peeling test, in the inkjet image forming apparatus according to the embodiment of the present disclosure.
FIG. 5 is a table showing a result of evaluation test of adhesion and opacifying property, in the inkjet image forming apparatus according to the embodiment of the present disclosure.

### DETAILED DESCRIPTION

Hereinafter, with reference to the drawings, an inkjet image forming apparatus according to one embodiment of the present disclosure will be described.

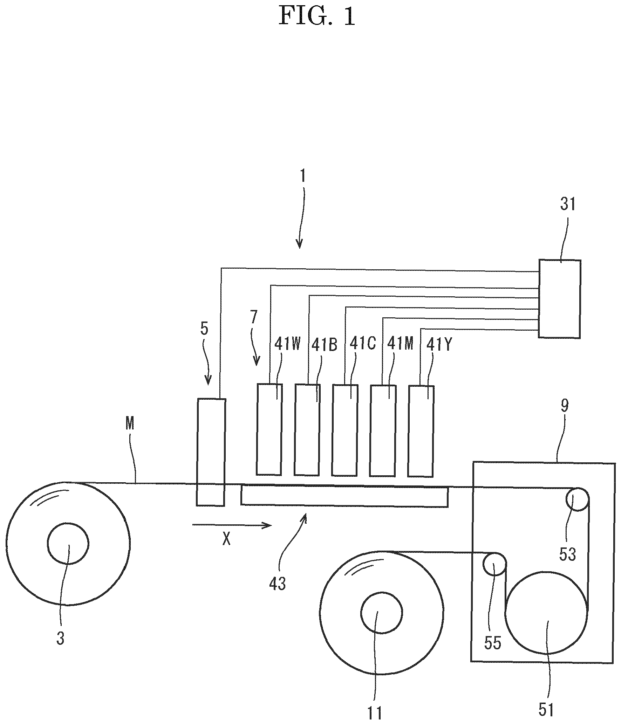

With reference to FIG. 1, an entire configuration of the inkjet image forming apparatus 1 will be described. FIG. 1 is a front view schematically showing an internal configuration of the inkjet image forming apparatus 1.

The inkjet image forming apparatus 1 includes a feed roller 3 around which a long printing base material M is wound, a corona treatment unit 5 which performs a corona treatment in which the printing base material M fed from the feed roller 3 is corona-discharged, an image forming part 7 which forms an image on the printing base material M subjected to the corona treatment by an inkjet method, a drying part 9 which dries the image formed by the image forming part 7, and a rewinding roller 11 which rewinds the printing base material M dried by the drying part 9.

First, the feed roller 3 will be described. The printing base material M is wound and mounted on the feed roller 3. When the feed roller 3 is rotated, the printing base material M is fed out in a predetermined conveyance direction X.

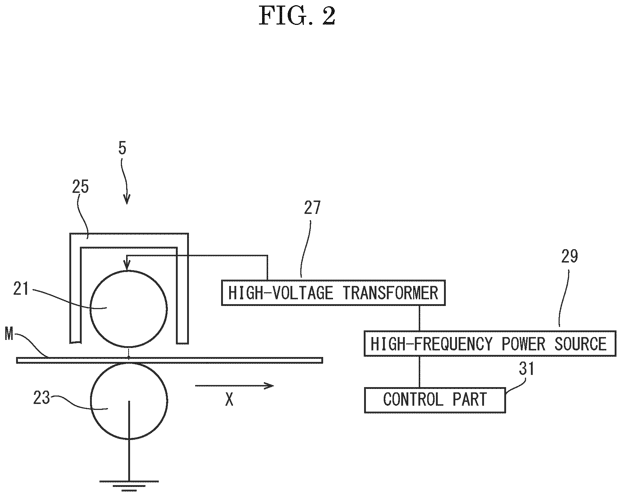

Next, the corona treatment unit 5 will be described with reference to FIG. 2. FIG. 2 is a view schematically showing the corona treatment unit 5. The corona treatment unit 5 is arranged on the downstream side of the feed roller 3 in the conveyance direction X. The corona treatment unit 5 includes a corona discharge electrode 21 and a counter roller 23.

The corona discharge electrode 21 is formed of, for example, a rod-shaped ceramic or an aluminum cylinder coated with ceramic, elongated in the width direction Y of the printing base material M. The corona discharge electrode 21 is covered with an electrode cover 25 whose lower surface is opened. The corona discharge electrode 21 is connected to a high-frequency power source 29 through a high-voltage transformer 27. The high frequency power source 29 generates a high frequency AC current. The high-frequency AC current is, for example, 5.5 kV to 6.5 kV. The higher the discharge power, the higher the discharge voltage (discharge amount). However, since the discharge voltage varies depending on the atmospheric pressure, temperature and humidity, and the others, the discharge voltage is set depending on the environmental conditions when the corona treatment is actually performed. The high-voltage transformer 27 amplifies the generated high-frequency AC current, converts it into a discharge power, and applies it to the corona discharge electrode 21. The high-frequency power source 29 is electrically connected to a control part 31, and generates a high-frequency AC current based on an instruction from the control part 31.

The counter roller 23 is formed of, for example, a stainless steel cylinder and is grounded. The counter roller 23 is arranged at a predetermined interval from the corona discharge electrode 21.

Next, the image forming part 7 will be described with reference to FIG. 1. The image forming part 7 is disposed on the downstream side of the corona treatment unit 5 in the conveyance direction X. The image forming part 7 includes five head units 41W, 41B, 41C, 41M, and 41Y (collectively referred to as a head unit 41) corresponding to inks of five colors (white, black, cyan, magenta, and yellow), and a conveying plate 43 on which the printing base material M is conveyed along the surface.

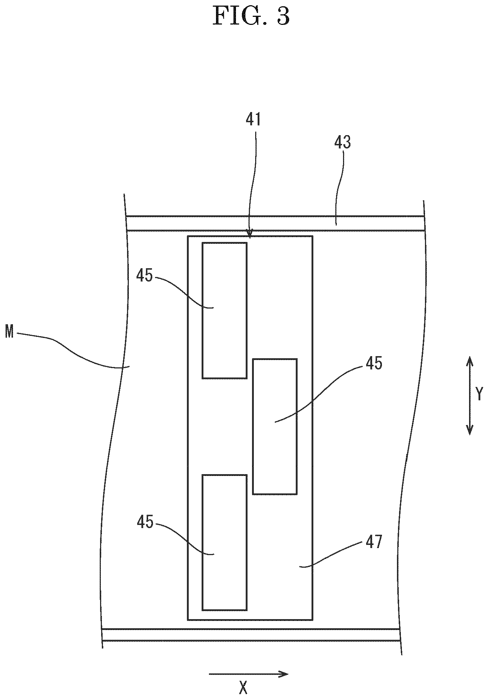

The head unit 41 will be described with reference to FIG. 3. FIG. 3 is a plan view showing the head unit 41. The head unit 41 includes three print heads 45 and a plate 47 for supporting the three print heads 45.

As shown in FIG. 3, the three print heads 45 are arranged in a staggered pattern along the width direction Y (line head system) so as to have the same width as that of the printing base material M, and are supported by the plate 47. The print head 45 includes a number of nozzles (not shown). The ejection port of the nozzle is opened on the lower surface of the print head 45.

The five head units 41W, 41B, 41C, 41M, and 41Y are arranged in order along the conveyance direction X, and the white, black, cyan, magenta, and yellow inks are supplied, respectively. The supplied ink is ejected downward from the ejection port of the nozzle of each print head 45. Each ink contains a pigment and a binder resin.

The pigment of the white ink is titanium oxide and the binder resin is polyurethane resin. A viscosity ρw (mPa·s) of the white ink at 25°C is smaller than a viscosity ρc (mPa·s) of the inks of colors other than white at 25°C. Further, an average particle diameter Dw (nm) of the pigment of the white ink is larger than an average particle diameter Dc (nm) of the pigment of the inks of colors other than white.

As shown in FIG. 1, the conveying plate 43 is arranged below the five head units 41. The upper surface of the conveying plate 43 is formed flat. As shown in FIG. 3, a width of the conveying plate 43 is wider than a width of the printing base material M and all the head units 41. A heat source (not shown) is provided below the conveying plate 43 to heat the conveying plate 43 to a predetermined temperature. The conveying plate 43 is made of metal, for example.

Next, the drying part 9 will be described. The drying part 9 is disposed on the downstream side of the image forming part 7 in the conveyance direction X. The drying part 9 includes a heat drum 51, and upstream-side and downstream-side tension rollers 53 and 55 arranged on the upstream side and the downstream side of the heat drum 51. The printing base material M passing through the image forming part 7 is wound around the heat drum 51 between the upstream-side and downstream-side tension rollers 53 and 55. The heat drum 51 is heated to heat the printing bae material M conveyed along the surface.

Next, the rewinding roller 11 will be described. The rewinding roller 11 is disposed on the downstream side of the drying part 9 in the conveyance direction X. The end of the printing base material M is fixed to the rewinding roller 11. The rewinding roller 11 is connected to a motor (not shown) and rotated. By rotating the rewinding roller 11 in a predetermined direction at a predetermined rotational speed by the motor, the printing base material M is fed out from the feed roller 3.

The fed printing base material M passes between the corona discharge electrode 21 and the counter roller 23 in the corona treatment unit 5, and is conveyed to the image forming part 7. In the image forming part 7, the printing base material M is conveyed toward the drying part 9 along the upper surface of the conveying plate 43 under the five head units 41. Then, after being wound on the heat drum 51 in the drying part 9, it is wound around the rewinding roller 11.

Next, the control part 31 will be described. As shown in FIG. 2, the control part 31 controls the high-frequency power source 29 of the corona treatment unit 5 to generate a high-frequency current of a predetermined intensity. To the control part 31, data of the image to be printed is input. The control part 31 is also electrically connected to the head units 41 and controls the head units 41 based on the input image data.

Further, the control part 31 determines whether a print job to be executed is a print job for ejecting the white ink or a print job for not ejecting the white ink, based on the input image data. Further, the control part 31 controls a discharge amount of the corona discharge electrode 21 of the corona treatment unit 5.

An image forming operation on a non-absorbent base material (plastic film) in the inkjet image forming apparatus 1 having the above configuration will be described. In the image forming operation, the control part 31 controls the corona treatment unit 5 so as to perform the corona treatment. Thus, corona discharge is generated between the corona discharge electrode 21 and the counter roller 23 in the corona treatment unit 5. Here, the control part 31 determines whether the print job is a print job for ejecting the white ink or not, and sets an amount of the corona discharge to W1 (W·min/m²) when the print job for ejecting the white ink is performed, and sets an amount of the corona discharge to W2 (W·min/m²) when the print job for not ejecting the white ink is performed. Here, W1≧W2. Note that W2 may be zero. When the printing base material M is not non-absorbent, the corona treatment by the corona treatment unit 5 is not performed.

Thereafter, the motor is driven to rotate the rewinding roller 11, and the printing bae material M is fed from the feed roller 3 to the corona treatment unit 5. In the corona treatment unit 5, corona discharge is generated between the corona discharge electrode 21 and the counter roller 23 at the set discharge amount, and the corona discharge is applied to the upper surface of the printing base material M.

Thereafter, the printing base material M is conveyed below the head units 41, and the ink of a predetermined color is ejected from the corresponding head unit 41 based on the image data to form an image on the printing base material M. The printing base material M on which the image is formed is conveyed to the drying part 9. In the drying part 9, the ink is completely dried. Thereafter, the printing base material M is rewound by the rewinding roller 11.

As described above, according to the present disclosure, a discharge amount in the corona treatment in the case of the print job in which the white ink is ejected is equal to or greater than a discharge amount of in the corona treatment in the case of the print job in which the white ink is not ejected. As described above, in order to increase a contrast ratio of the white ink, it is necessary to increase a particle size of the pigment, and in this case, the pigment cannot be completely coated with the binder resin, resulting in poor adhesion to the printing base material M. Therefore, the adhesion between the printing base material M and the ink can be improved by applying the corona discharge to the printing base material M. That is, when the printing base material M is subjected to the corona treatment, fine irregularities are formed on the surface of the printing base material M, and the ink easily enters these irregularities (anchor effect). Further, hydrophilic polar groups such as carbonyl groups, carboxyl groups and nitrides are formed on the surface of the printing base material M. Such a polar group enhances a wettability of the surface of the printing base material M. Therefore, the physical and chemical actions of the corona discharge treatment improve a compatibility (adhesion) between the printing base material M and the ink.

Therefore, in the case of the print job in which the white ink is ejected, by applying the corona discharge to the printing base material M with a higher discharge amount, even if it is the white ink, the adhesion to the printing base material M can be improved, and the peeling of the image can be prevented. The adhesion between the inks other than the white ink and the printing base material M is also enhanced.

The pigment of the white ink is titanium oxide and the binder resin is polyurethane resin. Titanium oxide is known as a pigment with good contrast property. Since the polyurethane resin has good compatibility with the printing base material, the adhesion between the white ink and the printing bae material M can be enhanced.

Further, a large amount of the white ink is ejected in order to improve the contrast property of the white ink. However, when an amount of the ejected ink increases, a dryness of the ejected ink decreases. The white ink generally includes water and high boiling materials that have a higher boiling point than water. Water is easier to dry than the high boiling materials. Therefore, an amount of the high boiling point material contained is decreased and an amount of water is increased accordingly. As a result, a viscosity of the white ink is apparently low.

In order to improve an opacifying property of the white ink, it is preferable that a size (average particle diameter) of the pigment of the white ink is large. In this embodiment, a viscosity of the pigment of the white ink is decreased and an average particle diameter is increased, so that the opacifying property can be improved.

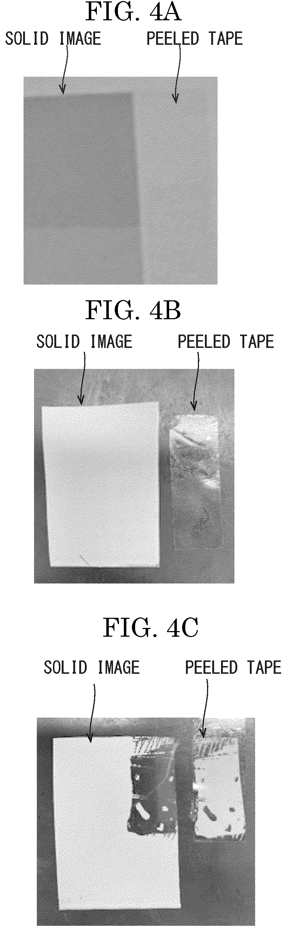

Next, a test for evaluating adhesion of the ink in the inkjet image forming apparatus 1 of this embodiment will be described with reference to FIG. 4A to FIG. 4C. The adhesion is evaluated by a peeling test.

The peeling test is carried out by the following method. After the printing base material M is subjected to the corona treatment by the corona treatment unit 5, cyan and white solid images are printed on the printing base material M at 600dpi. The printing base material M is an OPP film, a width of the printing base material M is 210 mm, and a conveying speed of the printing bae material M is 3 m/min. A discharge power of the corona treatment unit 5 is 100 W (discharge voltage is 6.3 kV).

The printed image is subjected to a peeling test based on JISK5600 (a cross cut is not formed). A tape (Product name: CT18, manufactured by NICHIBAN) is firmly rubbed onto the image with a fingertip, and within 5 minutes, the tape is peeled off, or the edge of the tape is grasped at an angle of close to 60 degrees and firmly pulled away within 0.5 to 1.0 seconds.

FIG. 4A is a photograph showing the cyan solid image after the tape is peeled, and FIG. 4B is a photograph showing the white solid image after the tape is peeled. FIG. 4C is a comparative photograph of the white solid image without the corona treatment after the tape is peeled off. In each figure, the left side shows the printing base material from which the tape is peeled, and the right side shows the peeled tape.

As shown in FIG. 4A, when the corona treatment is applied, no image peeling is observed in the cyan solid image. As shown in FIG. 4B, no image peeling is observed even in the white solid image. On the other hand, as shown in FIG. 4C, the white image peeling is observed when the corona treatment is not performed.

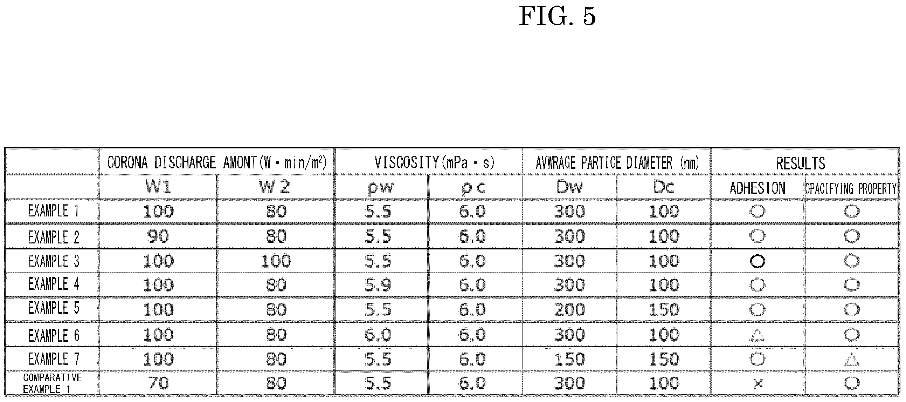

Next, a test in which the adhesion and opacifying property of the ink are evaluated in the inkjet image forming apparatus 1 of this embodiment will be described with reference to the table in FIG. 5.

The adhesion is evaluated by an image density of the peeled tape in the peeling test described above. In detail, an unused tape and the peeled tape are pasted on a copy paper (Product name C2, manufactured by Fujifilm Business Innovation Co., Ltd.), and the image density is measured by an image densitometer (Product name FD-5, manufactured by Konica Minolta). When a difference between the image density of the unused tape and the image density of the peeled tape is less than 0.05, it is defined as "o", when the difference is less than 0.15, it is defined as "Δ", and when the difference is 0.15 or more, it is defined as "x".

The opacifying property is evaluated by the following methods. The image formed on the printing base material is placed on a black area of a contrast ratio test paper (manufactured by TP Giken Co., Ltd.), and a density of the black color is measured using a spectral colorimeter (Product name CM-25cG, manufactured by Konica Minolta). When the image density is less than 0.2, it is defined as "o", when the image density is less than 0.3, it is defined as "Δ", and when the image density is 0.3 or more, it is defined as "x".

As shown in Examples 1 to 5, when a viscosity of the white ink is decreased and an average particle diameter is increased, by performing the corona treatment, good results are obtained in both the adhesion and the opacifying property. In this case, the corona discharge amount is larger than or equal to the discharge amount of the inks other than the white ink. In this example, it is preferable that an amount of corona discharge for the white ink is about 1.125 to 1.25 times (or 90 W·min/m² or more) of an amount of corona discharge for the inks other than white ink.

On the other hand, as shown in Example 6, when a viscosity of the white ink is increased, sufficient adhesion is not obtained. This is because a viscosity of the ink is high and the ink could not be sufficiently dried. Further, as shown in Example 7, when a particle size of the white ink is decreased, sufficient opacifying property is not obtained. In this example, a viscosity of the white ink is preferably less than 6.0 (mPa-s) and an average particle diameter is preferably 200 (nm) or more.

Further, as shown in Comparative Example 1, when a viscosity of the white ink is low and an average particle diameter is large, the adhesion becomes insufficient if the corona discharge amount is low (see also FIG. 4C).

Generally, a soft-packaged printed matter is formed by laminating a plurality of films on a printing base material on which an image is formed. For this reason, a step of laminating the films is included. In which case, it is preferable from the viewpoint of productivity to perform a front printing after the laminating step. In the case of front printing, the white ink is required in the lowermost layer, and therefore, it is preferable that the head unit 41W for ejecting the white ink is disposed on the upstream side of the head units for ejecting the inks of other colors in the conveyance direction X.

In the above embodiment, the drying part 9 is arranged on the downstream side of the five head units 41. However, the drying part for the white ink may be separately provided on the downstream side of the head unit 41W for ejecting the white ink.

Although the embodiments described above use the head units 41 of five colors, the present disclosure is not limited to five colors, but may be more or less than five colors. The head unit 41 is not limited to the line head system. However, the line head system is preferable because the printing speed can be increased. Although a long plastic film (PET film) is used as the printing base material M, a cut film may be used.

Although the present disclosure has been described with respect to specific embodiments, the present disclosure is not limited to the above embodiments. The above embodiments can be modified by those skilled in the art without departing from the scope and spirit of the present disclosure.

## Claims

1. An inkjet image forming apparatus (1) comprising:
a plurality of head units (41) which are provided for inks of a plurality of colors including white and ejects the ink to a printing base material which is conveyed along a predetermined conveyance direction;
a corona treatment unit (5) which is arranged on an upstream side of the head units (41) in the conveyance direction and applies corona discharge to the printing base material; and
a control part (31) which controls a discharge amount of the corona discharge applied by the corona treatment unit (5), wherein
the control part (31) controls the discharge amount so that W1≧W2 when the discharge amount in a case of a print job for ejecting the white ink is set to W1 (W· min/m²) and the discharge amount in a case of a print job for not ejecting the white ink is set to W2 (W·min/m²).

2. The inkjet image forming apparatus (1) according to claim 1, wherein
the head unit (41W) ejecting the white ink is arranged on the upstream side of the head units (41B), (41C), (41M), (41B) ejecting the ink of other color in the conveyance direction

3. The inkjet image forming apparatus (1) according to claim 1, wherein
a pigment of the white ink is titanium oxide.

4. The inkjet image forming apparatus (1) according to claim 1, wherein
a binder resin of the white ink is a polyurethane resin.

5. The inkjet image forming apparatus (1) according to claim 1, wherein
the printing base material is a plastic film.

6. The inkjet image forming apparatus (1) according to claim 1, wherein
when a viscosity of the white ink at 25°C is set to ρw (mPa·s) and a viscosity of the inks of colors other than white at 25°C is set to ρc (mPa-s), then ρw<ρc.

7. The inkjet image forming apparatus (1) according to claim 1, wherein:
when an average particle diameter of the pigment of the white ink is set to Dw (nm) and an average particle diameter of the pigment of the inks of colors other than white is set to Dc (nm), then Dw>Dc.
